# FASCICULE DE BREVET EUROPEEN

(11) **EP 1 148 778 B1**
(45) Date de publication et mention de la délivrance du brevet: **04.09.2002**
(21) Numéro de dépôt: 00901680.9
(22) Date de dépôt: 28.01.2000
(51) Int. Cl.: A01K 63/02, B65D 85/50

(54) **PROCEDE ET DISPOSITIF DE CONDITIONNEMENT, DE TRANSPORT ET D'ACCLIMATATION DE POISSONS EXOTIQUES OU DE PLANTES AQUATIQUES**
VERFAHREN UND VORRICHTUNG ZUR VERPACKUNG,ZUM TRANSPORT UND ZUM AKKLIMATISIEREN VON EXOTISCHEN FISCHEN ODER WASSERPFLANZEN
METHOD AND DEVICE FOR PACKAGING, TRANSPORTING AND ACCLIMATISATION OF EXOTIC FISH OR AQUATIC PLANTS

(30) Priorité: 03.02.1999 FR 9901335
(43) Date de publication de la demande: 31.10.2001
(73) Titulaire: Les Serres Aquatiques S.a.r.l., 51450 Bétheny (FR)
(72) Inventeur: MONNIER, Laurent, F-51100 Reims (FR)
(74) Mandataire: Gérardin, Robert Jean René
(86) Numéro de dépôt international: FR0000213
(87) Numéro de publication internationale: WO00045632

(56) Documents cités:
- FR-A- 2 755 432
- US-A- 3 491 722
- US-A- 4 040 200
- US-A- 4 188 909
- US-A- 5 165 361

## Description

L'invention concerne un procédé et un dispositif de conditionnement, de transport et d'acclimatation de poissons exotiques ou de plantes aquatiques.

Le transport des poissons exotiques vivants s'effectue, depuis plus de 60 ans, en utilisant des sacs en matière plastique souple, qui risquent de fuir par perçage ou de tuer des poissons par pincement dans les angles. Il en résulte une perte non négligeable au cours du transport. Par ailleurs, les sacs en plastique ne se prêtent pas, du fait de leur souplesse, à une acclimatation progressive des poissons avant leur transfert dans les aquariums où ils sont destinés à poursuivre leur vie ; or, l'aquachimie des sacs et celle des aquariums sont généralement très différentes, notamment au niveau du pH du nitrate et de l'ammonium, ce qui provoque une mortalité parfois importante dans les semaines qui suivent l'introduction des poissons dans les aquariums ; ce qui est particulièrement préjudiciable, s'agissant de poissons exotiques parfois assez rares, dont le prix est souvent très élevé.

Le même problème se pose pour les plantes aquatiques exotiques, destinées à paysager les aquariums.

Il existe déjà, dans l'état de la technique, différents procédés et moyens destinés à assurer le maintien en vie, au cours de leur transport, d'éléments marins vivants, en particulier des mollusques, tels que ceux décrits dans les documents suivants :
Brevet US 5.165.361.A, qui décrit un procédé et un dispositif de traitement et de maintien en vie de mollusques bivalves hors de leur milieu naturel, garantissant une commercialisation sans danger pour les consommateurs. Le dispositif proposé pour répondre à ces préoccupations est constitué d'une barquette rigide transparente, faisant appel, pour sa fermeture, à un couvercle rigide transparent, s'emboîtant sur les bords de la barquette, muni d'une valve destinée à permettre l'introduction d'un gaz d'une composition appropriée, après avoir extrait l'air emprisonné dans la barquette lors de sa fermeture, après introduction des mollusques et de leur liquide de conservation. Un tel moyen, s'il se prêterait éventuellement au transport de poissons et de plantes aquatiques vivants, ne permettrait pas la réalisation d'un conditionnement initial rigoureux, et encore moins de procéder à une acclimatation appropriée, seule garante du maintien en vie et du développement ultérieur, en aquarium, des organismes ainsi transportés.
Brevet FR 2.755.432.A, qui décrit un conditionnement pour animaux aquatiques vivants, utilisant un bac contenant de l'eau et de l'air, fermé de façon étanche par un couvercle, qui se distingue principalement des dispositifs similaires par une forme particulière du fond et des parois, prenant en compte la forme des animaux aquatiques dont il s'agit, et qui sont exclusivement, dans ce cas, des coquillages bivalves, notamment des huîtres, qui peuvent être ainsi disposés en une seule couche, sans risque de basculement ni de superposition au cours des manutentions successives imposées par le transport. La préoccupation de l'inventeur est, dans ce cas, la même que dans l'exemple ci-dessus analysé.
Brevet US 4.040.200.A, qui concerne un container constituant une sorte de vivier portable, destiné essentiellement à maintenir en vie des poissons utilisables pour la pêche au vif ou le réempoissonnement, afin qu'ils conservent toute leur vivacité. Pour cela, le couvercle, réutilisable, a été muni, à la fabrication, de deux orifices avec bouchon, permettant d'assurer l'oxygénation de l'eau et l'aspiration simultanée de l'air emprisonné entre la surface de l'eau et le couvercle, à l'aide d'un moyen fixé contre la paroi extérieure du container. Une tuyauterie de fort diamètre est prévue à la base du container, pour permettre le déversement de tout ou partie du contenu, après l'ouverture d'un bouchon du couvercle.

Comme on le remarque, aucun des procédés et dispositifs décrits dans les documents ci-dessus brièvement analysés, qu'ils soient considérés seuls ou en combinaison, ne permet le conditionnement et le transport des organismes vivants d'origine aquatique dont il s'agit, et encore moins l'acclimatation progressive de poissons ou de plantes exotiques délicats, destinés à poursuivre leur vie en aquarium, dans des conditions totalement artificielles, étant rappelé que les poissons et les plantes concernés coûtent très chers et que la moindre perte lors du transport ou de l'acclimatation est préjudiciable à la rentabilité de l'activité correspondante, relevant de l'aquariophilie et non de la pisciculture.

La présente invention a pour but de remédier à ces inconvénients. Cette invention, telle qu'elle se caractérise, résout le problème consistant à définir un procédé et à créer un dispositif de conditionnement, de transport et d'acclimatation de poissons exotiques ou de plantes aquatiques exotiques, avec lesquels, d'une part, les pertes au cours du transport soient réduites au strict minimum, voire réduites à zéro, et, d'autre part, une acclimatation aux nouvelles conditions aquachimiques de l'eau des aquariums puisse être effectuée dans des conditions idéales, préalablement au transfert des poissons ou des plantes aquatiques concernés dans les aquariums récepteurs.

Le procédé de conditionnement, de transport et d'acclimatation de poissons exotiques ou de plantes aquatiques, mettant en oeuvre une barquette en matière plastique rigide et un film en matière plastique transparente assurant la fermeture hermétique de ladite barquette après remplissage partiel de celle-ci avec de l'eau contenant les poissons ou les plantes, avec adjonction éventuelle d'un gaz, se caractérise en ce que :
A- le conditionnement s'effectue selon les étapes suivantes:
   a) les poissons ou les plantes à expédier sont placés dans une quantité d'eau versée préalablement dans la barquette, représentant environ respectivement 50% ou 80% de la capacité de celle-ci,
   b) la barquette est mise sous vide, puis fermée avec le film en matière plastique après introduction éventuelle d'un gaz,
B- l'acclimatation s'effectue selon les étapes suivantes :
   - après avoir disposé la barquette à plat, percement de deux orifices dans le film plastique obturant la barquette,
   - introduction, goutte-à-goutte, d'eau en provenance de l'aquarium récepteur,
   - poursuite du goutte-à-goutte pendant un temps déterminé, après déversement du trop-plein d'eau par le second orifice,
   - retrait du film de matière plastique,
   - transfert des poissons ou des plantes dans l'aquarium.

Le dispositif d'application du procédé selon l'invention, mettant en oeuvre une barquette en matière plastique rigide et un film en matière plastique transparente assurant la fermeture hermétique de la dite barquette après remplissage partiel de celle-ci, se caractérise principalement en ce que le film plastique comporte le marquage de l'emplacement des deux orifices à réaliser dans le film, pour permettre la réalisation de la phase d'acclimatation, en ce que le dispositif d'acclimatation est constitué d'une tuyauterie souple, dont l'une des extrémités est reliée à un tube plongeur plongé dans l'eau de l'aquarium et dont l'autre extrémité pénètre, par l'intermédiaire d'un robinet, à l'intérieur de la barquette par l'un des orifices préalablement percés dans le film.

Plusieurs barquettes contenant des poissons ou/et des plantes, destinées au même aquarium, peuvent être acclimatées collectivement par l'intermédiaire d'une tuyauterie commune, reliée à un tube plongeur par un raccord et à un répartiteur relié à chacune des barquettes par l'intermédiaire de tuyauteries individuelles et de robinets.

L'écoulement d'eau, de l'aquarium vers chaque barquette, s'effectue par gravité, en disposant chaque dite barquette en dessous du niveau d'eau de l'aquarium.

Les avantages obtenus, grâce à cette invention, consistent, essentiellement, en ce que la phase de conditionnement peut être réalisée de façon entièrement automatisée, en ce que le transport peut être effectué de façon rationnelle, pendant une durée pouvant aller jusqu'à six jours pour les poissons et quatre semaines pour les plantes aquatiques, et en ce que l'acclimatation peut s'effectuer très facilement, dans la barquette même ayant servi au transport, en offrant aux organismes concernés les meilleures chances de survie.

D'autres caractéristiques et avantages apparaîtront dans la description qui va suivre d'un dispositif selon l'invention, utilisé pour le transport de poissons exotiques, du lieu de production au lieu de commercialisation, donné à titre d'exemple non limitatif, au regard des dessins annexés sur lesquels:
- la figure 1 représente une vue schématique, en perspective, d'une barquette obturée par un film en matière plastique,
- la figure 2 représente une vue schématique, en perspective, du dispositif d'acclimatation en cours d'utilisation,
- la figure 3 représente une vue en perspective d'une barquette pleine et la caisse de transport collectif, couvercle levé,
- la figure 4 représente une vue en perspective d'une barquette pleine, avec indication des points de perçage du film,
- la figure 5 représente une vue en perspective d'une barquette pleine en cours d'acclimatation,
- la figure 6 représente une vue en perspective d'une barquette pleine en cours de vidange partielle de l'eau qu'elle contient, après acclimatation, avec indication des orifices percés dans le film,
- la figure 7 représente une vue en perspective d'une barquette partiellement vidangée, en cours d'ouverture,
- la figure 8 représente une barquette en cours de transvasement de son contenu dans un aquarium,
- la figure 9 représente une vue de face en perspective d'une installation d'acclimatation à trois postes.

Les figures représentent un dispositif de conditionnement, de transport et d'acclimatation de poissons exotiques réalisé selon l'invention, comportant, principalement, des barquettes 10 obturables par un film transparent 20, avec marquage de l'emplacement des orifices d'acclimatation 21, 22, et des tuyauteries souples 30, 31, 32, 33 reliées, entre elles par un répartiteur 34, à un tube plongeur 35 par un raccord 36, et aux barquettes 10, 11, 12 par des robinets goutte-à-goutte 37 dont le bec pénètre dans l'un des orifices d'acclimatation 21,22 ; le raccord 36 du tube plongeur 35 étant retenu au bord de l'aquarium 1 par un crochet 38.

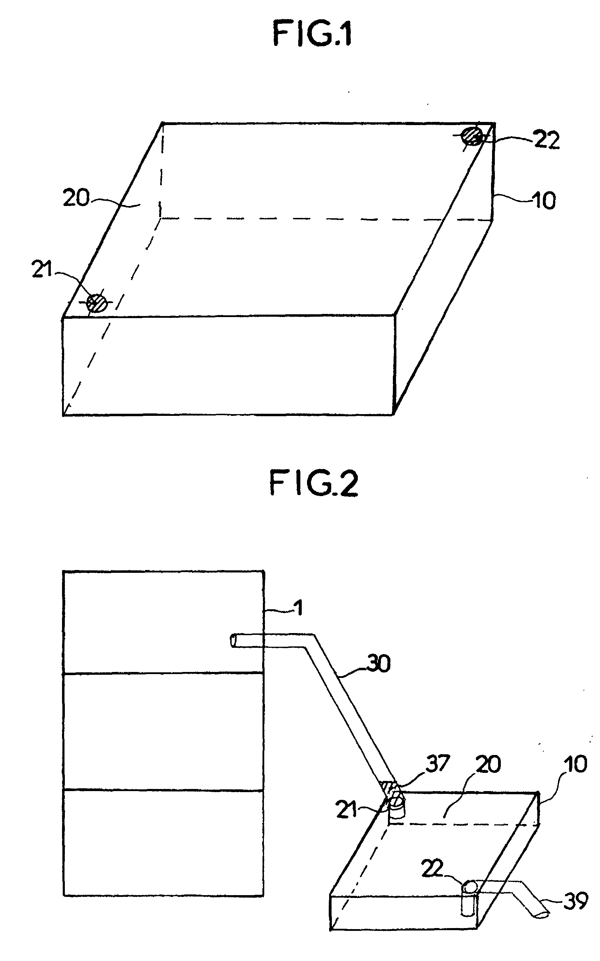

En examinant maintenant plus en détail les figures 1 et 2, on remarque que les barquettes 10 sont, après introduction d'une quantité d'eau correspondant sensiblement à la moitié de la capacité de ladite barquette, introduction des poissons exotiques à transporter, mise sous vide et introduction éventuelle d'un gaz, fermées avec un film transparent 20, comportant, outre des indications 23 concernant l'acclimatation ultérieure, le marquage des emplacements des orifices d'acclimatation 21 et 22 qui seront à percer pour, d'une part, pouvoir introduire le bec d'un robinet goutte-à-goutte 37 à l'intérieur de la barquette 10, et, d'autre part, permettre l'évacuation du trop-plein d'eau, comme indiqué sur la figure 2, montrant une barquette 10 reliée à un aquarium 1 par une tuyauterie 30 munie d'un robinet goutte-à-goutte 37, avec évacuation du trop-plein d'eau par une tuyauterie 39.

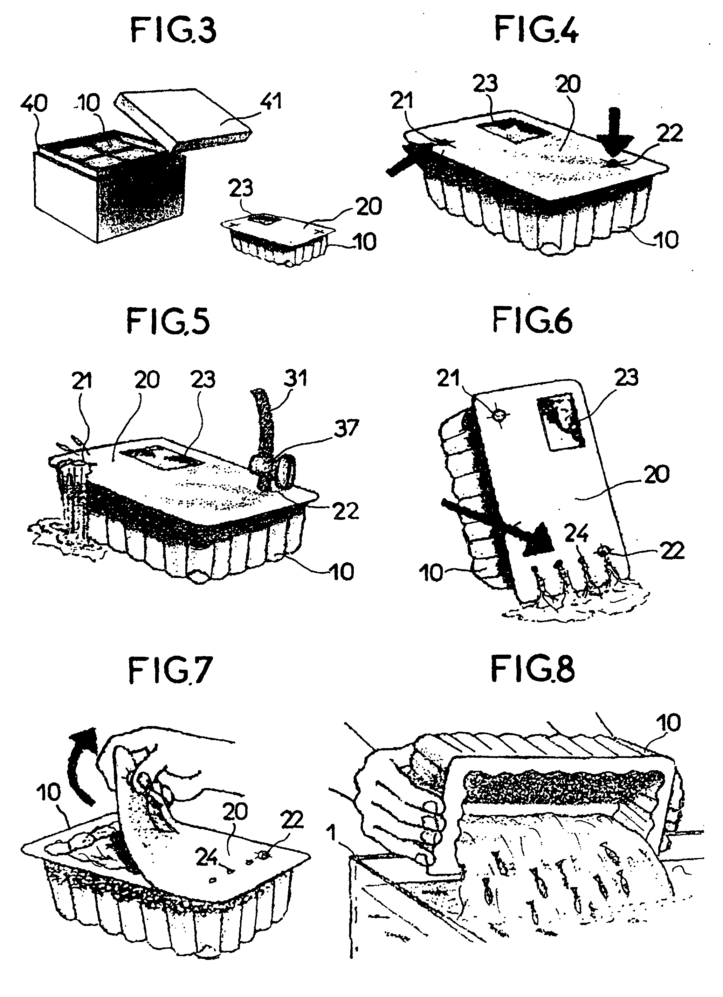

En procédant à l'examen successif des figures 3 à 8, représentant la succession des opérations relatives à la phase d'acclimatation du procédé selon l'invention, on remarque, en examinant tout d'abord la figure 3, que les barquettes 10 sont regroupées dans des caisses 40 à couvercle 41 en polystyrène, en adoptant une disposition en quinconce sur plusieurs niveaux.

La figure 4 montre une barquette pleine 10 sortie de sa caisse de transport 40, dans le film 20 de laquelle ont été percés les orifices 21 et 22 aux emplacements indiqués, en suivant les indications 23 figurant sur le film 20.

La figure 5 montre une barquette 10 au cours de l'opération d'acclimatation des poissons qu'elle contient, par déversement au goutte-à-goutte, par gravité, d'eau de l'aquarium, jusqu'à obtenir le débordement de l'eau de la barquette 10 par l'orifice de trop-plein 21 préalablement percé, cette acclimatation étant poursuivie pendant environ une heure.

La figure 6 représente l'opération d'écoulement partiel de l'eau contenue dans la barquette 10, par inclinaison du côté de l'orifice de trop-plein 22, après percement d'orifices supplémentaires 24 sur une même ligne, parallèle au petit côté correspondant de la barquette 10.

La figure 7 montre qu'après rejet d'environ 50% de l'eau contenue dans la barquette, en procédant comme représenté à la figure 6, le film transparent d'obturation 20 est progressivement décollé et retiré.

La figure 8 représente l'opération de transvasement de l'eau et des poissons contenus dans la barquette 10, après acclimatation, dans l'aquarium, par simple déversement latéral.

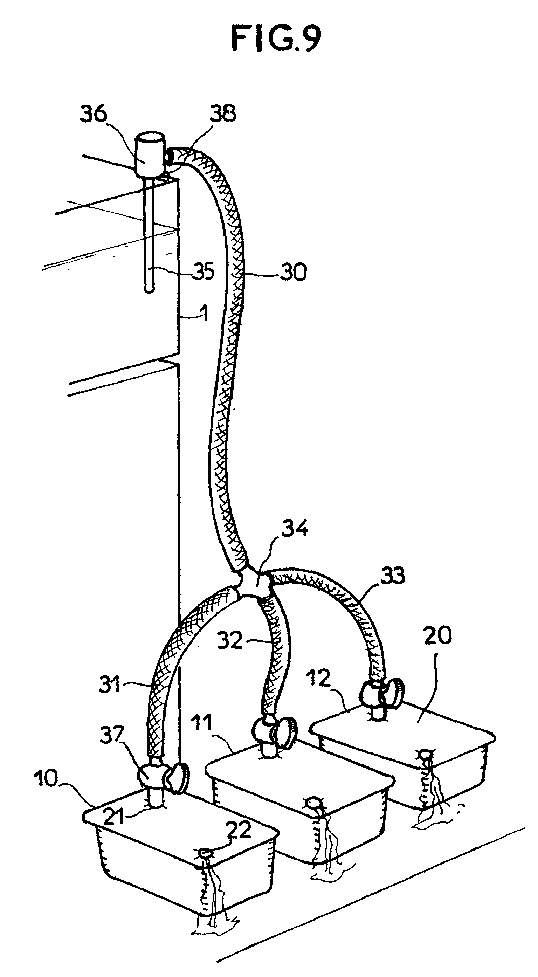

En se rapportant à la figure 9, montrant le détail d'une installation d'acclimatation collective, on remarque que, après perçage des orifices 21 et 22 de plusieurs barquettes 10, 11, 12, en procédant comme représenté à la figure 4, puis introduction du bec des robinets goutte-à-goutte 37 correspondants, situés à l'extrémité libre de tuyauteries individuelles 31, 32, 33, reliées, par un répartiteur 34 et une tuyauterie collective 30, à un raccord 36, fixé au bord de l'aquarium concerné 1 par un crochet 38 et prolongé, vers le fond du dit aquarium 1, par un tube plongeur 35, dont l'extrémité est située en dessous du niveau d'eau, il suffit alors, après avoir disposé les barquettes 10, 11 et 12 en dessous du niveau d'eau de l'aquarium, d'obtenir l'écoulement au goutte-à-goutte, par gravité, par action sur les robinets 37, afin d'obtenir le renouvellement progressif complet de l'eau contenue dans les barquettes sous un délai d'environ une heure pour les poissons. Cette opération étant effectuée, on procède alors au transfert des poissons dans l'aquarium, en procédant comme représenté aux figures 6 à 8.

Concernant maintenant les plantes aquatiques exotiques, elles étaient, jusqu'alors, transportées de manière très simple, c'est-à-dire emballées dans des journaux humides ou dans des sacs en matière plastique regroupés dans des caisses en carton utilisées pour le transport. Une fois arrivées à destination, elles étaient déballées et mises sous acclimatation dans l'eau des bacs à plantes.

En utilisant le procédé et le dispositif selon l'invention, les plantes sont conditionnées dans les barquettes sans eau, mais avec une hygrométrie précise, avec mise sous vide suivie de l'injection d'un gaz spécifique facilitant la conservation pendant le transit, et fermeture étanche avec un film en matière plastique, en procédant comme représenté sur les figures 3 à 7 ; l'opération de la figure 8 étant remplacée par le repiquage direct des plantes dans l'aquarium.

La durée de conservation des plantes aquatiques ainsi conditionnées est de deux à trois semaines, ce qui permet leur commercialisation directe dans leur conditionnement d'origine et une acclimatation au goutte-à-goutte selon l'invention, juste avant la replantation dans l'aquarium.

Dans la pratique, on utilise, pour le conditionnement des poissons, les techniques suivantes :
1 ) Pour la grande majorité des espèces
   a) 50% d'eau vieillie ou neuve à une bonne température,
   b) mise sous vide de l'emballage, puis injection d'oxygène, avec une adaptation et un réglage bien précis pour ne pas nuire aux poissons,
   c) adjonction d'un produit spécifique anti-ammonium, dosé correctement,
   d) adjonction d'un produit spécifique anti-stress, dosé correctement,
   e) utilisation d'un film barrière spécifique pour l'obturation de la barquette. Ce film est fourni en rouleau, avec prémarquage des orifices d'acclimatation et d'une bande dessinée en quatre couleurs, représentant la succession des opérations d'acclimatation telles que reproduites aux figures 4 à 8.
2) Pour certaines espèces (labiryntidae), le conditionnement s'effectue sans mise sous vide, donc sans apport d'oxygène.

Pour le transport, seize barquettes peuvent être regroupées dans une même caisse en polystyrène, comme représenté à la figure 3, alors que l'ancien procédé de conditionnement ne permettait de regrouper, dans la même caisse, que cinq sacs en matière plastique contenant chacun le même nombre de poissons que les barquettes selon l'invention, et ce pour un poids très inférieur. Il résulte de ceci que, trois fois plus de poissons peuvent être transportés dans la même caisse pour le même poids. A la réception, comme représenté à la figure 3, les caisses 40 sont ouvertes par retrait de leur couvercle 41 et les barquettes en sont extraites, avec contrôle visuel immédiat pour vérifier l'état de santé des poissons, puis placées à l'endroit prévu pour l'acclimatation.

Le procédé et le dispositif selon l'invention, bien que tout particulièrement destinés au transport et à l'acclimatation des poissons et de plantes aquatiques d'aquarium, pourraient être aussi utilisés, sous réserve d'adaptations mineures ne sortant pas du cadre de l'invention, pour le conditionnement et le transport, voire même l'acclimatation dans certains cas, d'autres espèces animales et végétales, exigeant le maintien d'une certaine humidité pendant le transport ou d'une présence d'eau (reptiles, batraciens, etc).

## Revendications

1. Procédé de conditionnement, de transport et d'acclimatation de poissons exotiques ou de plantes aquatiques, mettant en oeuvre une barquette en matière plastique rigide et un film en matière plastique transparente assurant la fermeture hermétique de la dite barquette après remplissage partiel de celle-ci avec de l'eau contenant les poissons ou les plantes, avec adjonction éventuelle d'un gaz, **caractérisé en ce que** :
A- le conditionnement s'effectue selon les étapes suivantes :
a) les poissons ou les plantes à expédier sont placés dans une quantité d'eau versée préalablement dans la barquette, représentant environ respectivement 50 % ou 80 % de la capacité de celle-ci,
b) la barquette est mise sous vide, puis fermée avec le film en matière plastique après introduction éventuelle d'un gaz,
B- l'acclimatation s'effectue selon les étapes suivantes :
- après avoir disposé la barquette à plat, percement de deux orifices dans le film plastique obturant la barquette,
- introduction, goutte-à-goutte, d'eau en provenance de l'aquarium récepteur,
- poursuite du goutte-à-goutte pendant un temps déterminé, après déversement du trop-plein d'eau par le second orifice,
- retrait du film de matière plastique,
- transfert des poissons ou des plantes dans l'aquarium.

2. Dispositif d'application du procédé selon la revendication 1, comportant une barquette en matière plastique rigide et un film en matière plastique transparente assurant la fermeture hermétique de la dite barquette après remplissage partiel de celle-ci, **caractérisé en ce que** le film plastique **(20)** comporte le marquage de l'emplacement des deux orifices **(21,22)** à réaliser dans le film **(20)**, pour permettre la réalisation de la phase d'acclimatation, **en ce que** le dispositif d'acclimatation est constitué d'une tuyauterie souple **(30)**, dont l'une des extrémités est reliée à un tube plongeur **(35)** plongé dans l'eau de l'aquarium **(1)** et dont l'autre extrémité pénètre, par l'intermédiaire d'un robinet **(37)**, à l'intérieur de la barquette **(10)** par l'un des orifices **(21,22)** préalablement percés dans le film **(20)**.

3. Dispositif selon la revendication 2, **caractérisé en ce que** plusieurs barquettes **(10,11,12)** contenant des poissons ou/et des plantes, destinées au même aquarium **(1)**, peuvent être acclimatées collectivement par l'intermédiaire d'une tuyauterie commune **(30)**, reliée à un tube plongeur **(35)** par un raccord **(36)** et à un répartiteur **(34)** relié à chacune des barquettes **(10,11,12)** par l'intermédiaire de tuyauteries individuelles **(31, 32, 33)** et de robinets **(37)**.

4. Dispositif selon la revendication 2 ou 3, **caractérisé en ce que** l'écoulement d'eau, de l'aquarium **(1)** vers chaque barquette **(10,11,12)**, s'effectue par gravité, en disposant chaque dite barquette **(10,11,12)** en dessous du niveau d'eau de l'aquarium **(1)**.

## Patentansprüche

1. Verfahren zur Konditionierung, zum Transport und zur Akklimatisierung von exotischen Fischen oder von Wasserpflanzen unter Verwendung eines Behälters aus steifem Kunststoff und einer transparenten Kunststofffolie, die eine hermetische Abdichtung des Behälters gewährleistet, nachdem dieser teilweise mit Wasser, das die Fische oder die Pflanzen enthält, gefüllt wurde, wobei gegebenenfalls ein Gas hinzugefügt wird, **dadurch gekennzeichnet, dass**:
A) die Konditionierung gemäß den folgenden Schritten durchgeführt wird:
a) die zu versendenden Fische bzw. Pflanzen werden in eine zuvor in den Behälter gegossene Wassermenge gesetzt, die ungefähr 50% bzw. 80% von dessen Kapazität ausmacht;
b) der Behälter wird evakuiert und dann mit der Kunststofffolie verschlossen, nachdem man gegebenenfalls ein Gas eingeleitet hat;
B) die Akklimatisierung gemäß den folgenden Schritten durchgeführt wird:
- nachdem man den Behälter flach hingelegt hat, Stechen von zwei Öffnungen in die Kunststofffolie, die den Behälter verschließt;
- tropfenweise Einführung von Wasser, das aus dem aufnehmenden Aquarium stammt;
- Fortsetzung der tropfenweise Einführung während einer bestimmten Zeit, nachdem man das überschüssige Wasser durch die zweite Öffnung ausgegossen hat;
- Abnehmen der Kunststofffolie;
- Überführung der Fische oder Pflanzen in das Aquarium.

2. Vorrichtung zur Anwendung des Verfahren gemäß Anspruch 1, umfassend einen Behälter aus steifem Kunststoff und eine transparente Kunststofffolie, die eine hermetische Abdichtung des Behälters gewährleistet, nachdem dieser teilweise gefüllt wurde, **dadurch gekennzeichnet, dass** die Kunststofffolie (20) eine Markierung für den Ort der beiden Öffnungen (21, 22) umfasst, die in die Folie (20) gemacht werden sollen, um die Durchführung der Akklimatisierungsphase zu ermöglichen, dass die Akklimatisierungsvorrichtung aus einem weichen Rohrsystem (30) besteht, dessen eines Ende mit einem Tauchrohr (35) verbunden ist, das in das Wasser des Aquariums (1) eingetaucht ist, und dessen anderes Ende über einen Hahn (37) über eine der Öffnungen (21, 22), die zuvor in die Folie (20) gestochen wurden, in das Innere des Behälters (10) eindringt.

3. Vorrichtung gemäß Anspruch 2, **dadurch gekennzeichnet, dass** mehrere Behälter (10, 11, 12), die Fische und/oder Pflanzen enthalten, welche für dasselbe Aquarium (1) bestimmt sind, gemeinsam mittels eines gemeinsamen Rohrsystems (30) akklimatisiert werden können, das über ein Verbindungsstück (36) mit einem Tauchrohr (35) sowie mit einem Verteiler (34) verbunden ist, der über einzelne Rohrsysteme (31, 32, 33) und Hähne (37) jeweils mit den Behältern (10, 11, 12) verbunden ist.

4. Vorrichtung gemäß Anspruch 2 oder 3, **dadurch gekennzeichnet, dass** das Fließen von Wasser aus dem Aquarium (1) in jeden Behälter (10, 11, 12) durch Schwerkraft erfolgt, indem man jeden der Behälter (10, 11, 12) unterhalb des Wasserniveaus des Aquariums (1) anordnet.

## Claims

1. Process for preparing, transporting and acclimatizing exotic fish or aquatic plants, employing a tank of a rigid plastic material and a transparent plastic foil serving to hermetically seal the said tank after it has been partially filled with water containing the fish or plants, with the possible addition of a gas, **characterized in that**:
A- The preparation takes place along the following steps:
a) The fish or plants to be transported are placed in the tank prefilled with water respectively to about 50% or 80% of its capacity;
b) The tank is purged of air and, after the injection of a gas where appropriate, sealed with the plastic foil.
B- The acclimatization is performed along the following steps:
- After the tank is levelled, two perforations are punched into the plastic foil sealing the tank;
- Water from the receiving aquarium is introduced drop-by-drop;
- After the removal of excess water through the second perforation the drop-by-drop introduction of water is continued for a specific length of time;
- The plastic foil is removed;
- The fish or plants are transferred into the aquarium.

2. Device for applying the process per claim 1, employing a tank of a rigid plastic material and a transparent plastic foil serving to hermetically seal the said tank after it has been partially filled, **characterized in that** the plastic foil (20) is provided with markings indicating the location of the two perforations (21, 22) to be punched into the foil (20) so as to permit the implementation of the acclimatization phase, that the acclimatization device encompasses flexible tubing (30) one end of which is connected to an immersion tube (35) inserted in the water of the aquarium (1) while its other end extends via a valve (37) into the tank (10) through one of the perforations (21, 22) previously punched into the plastic foil (20).

3. Device as in claim 2, **characterized in that** several tanks (10, 11, 12) containing fish and/or plants for the same aquarium (1) can be acclimatized together by way of common tubing (30) connected to an immersion tube (35) via a coupling (36) and to a manifold (34) connected to each of the tanks (10, 11, 12) by way of individual tubes (31, 32, 33) and valves (37).

4. Device as in claim 2 or 3, **characterized in that** the outflow of water from the aquarium (1) toward each tank (10, 11, 12) takes place by gravity, for which each such tank (10, 11, 12) is placed beneath the water level of the aquarium (1).
